# EUROPÄISCHE PATENTANMELDUNG

(11) **EP 2 865 961 A1**
(43) Veröffentlichungstag der Anmeldung: **29.04.2015**
(21) Anmeldenummer: 14188990.7
(22) Anmeldetag: 15.10.2014
(51) Int. Cl.: F24H 1/18, F16L 59/08

(54) **Warmwasserspeicher**

(30) Priorität: 22.10.2013 AT 8122013
(71) Anmelder: Vaillant GmbH, 42859 Remscheid (DE)
(72) Erfinder: Kämpchen, Marian, 42289 Wuppertal (DE); Ellinghaus, Gunnar, 50735 Köln (DE); Goldberg, Jens-Ole, 42553 Velbert (DE); Martin, Michael, 42899 Remscheid (DE)
(74) Vertreter: Popp, Carsten

(57) **Zusammenfassung**

Die Erfindung betrifft ein Verfahren zur Herstellung eines Warmwasserspeichers sowie einen Warmwasserspeicher. Zur Verbesserung der Isolierwirkung wird der Behälter 1 des Warmwasserspeichers direkt mit einer Beschichtung 7 in Form einer Metallfolie umgeben, in eine Ummantelung 8 eingesetzt und der Zwischenraum zwischen Behälter 1 und Ummantelung 8 ausgeschäumt.

## Beschreibung

Die Erfindung betrifft ein Verfahren zur Herstellung eines Warmwasserspeichers für Brauch-oder Heizungswasser mit einer verbesserten Isolierung sowie einen Warmwasserspeicher, welcher durch das erfindungsgemäße Verfahren hergestellt ist.

Gattungsgemäße Warmwasserspeicher sind aus der DE 44 13 629 A1 bekannt und werden eingesetzt, um die von einer Wärmequelle bereitgestellte Wärmeenergie zwecks späterer Entnahme für Heizzwecke oder zur Brauchwasserversorgung zu speichern. Derartige Speicher sind erforderlich, wenn beispielsweise die Energie der Wärmequelle zu einem anderen Zeitpunkt zur Verfügung steht als sie benötigt wird. Dies ist beispielsweise der Fall, wenn die Wärmeenergie durch einen Solarkollektor bereitgestellt wird, der nur an Sonnentagen Wärmeenergie liefert. Ein weiterer Vorteil eines Speichers ist, dass kurzfristig eine höhere Wärmeleistung entnommen werden kann, als von der Wärmequelle zugeführt werden kann.

Das in einem Warmwasserspeicher eingesetzte Speichermedium kann entweder Wasser in Form von Heizungswasser, Trinkwasser oder Sole sein oder ein Zwei-Phasen-Medium beispielsweise in Form eines Phasenwechselmaterials wie Paraffin oder Salzhydrat sein.

Insbesondere in den Fällen, in denen die Wärmeenergie über einen längeren Zeitraum gespeichert werden soll, vor allem bei Einsatz eines Solarkollektors als Wärmequelle, wird eine möglichst hohe Energiespeicherkapazität des Warmwasserspeichers gefordert. Die Energiespeicherkapazität ist direkt abhängig vom Volumen des Speichers. Jedoch werden durch die baulichen Randbedingungen des Raumes, in dem der Speicher in einem Gebäude aufgestellt wird, Rahmenbedingungen geschaffen, die das maximal mögliche Volumen begrenzen. Andererseits hängt der Energieverlust, der durch die Abgabe der Wärme des gespeicherten warmen Wassers an die Umgebung bewirkt wird, direkt von der Isolierung des Warmwasserspeichers ab. Grundsätzlich ist die Wirkung der Isolierung umso besser, je dicker die Isolierung ist.

Somit besteht ein Zielkonflikt zwischen der Energiespeicherkapazität und der Qualität der Isolierung. Eine Vergrößerung der Stärke der Isolierung würde bei vorgegebener Einbausituation und somit vorgegebenen Außenabmessungen zwangsläufig zu einer Verringerung der Energiespeicherkapazität führen.

Bekannte alternative Isolierungen mit besserer Isolationswirkung bei gleichzeitig geringer Stärke der Isolierung sind zwar beispielsweise in Form von Vakuumpanels oder aus dem Gebrauchsmuster DE 20 2006 014 881 U1 in Form von Kammern mit isolierender Gasfüllung bekannt, jedoch sehr teuer und aufwändig in der Herstellung.

Es ist daher Aufgabe der Erfindung, ein Verfahren zur kostengünstigen Herstellung eines Warmwasserspeichers mit verbesserter Isolierungswirkung bei gleichem Bauraum sowie einen kostengünstigen Warmwasserspeicher mit verbesserter Isolierung bereitzustellen.

Erfindungsgemäß erfolgt dies durch ein Verfahren gemäß den Merkmalen des unabhängigen Verfahrensanspruchs sowie durch einen Warmwasserspeicher gemäß den Merkmalen des unabhängigen Vorrichtungsanspruchs.

Vorteilhafte Ausgestaltungen ergeben sich durch die Merkmale der abhängigen Ansprüche.

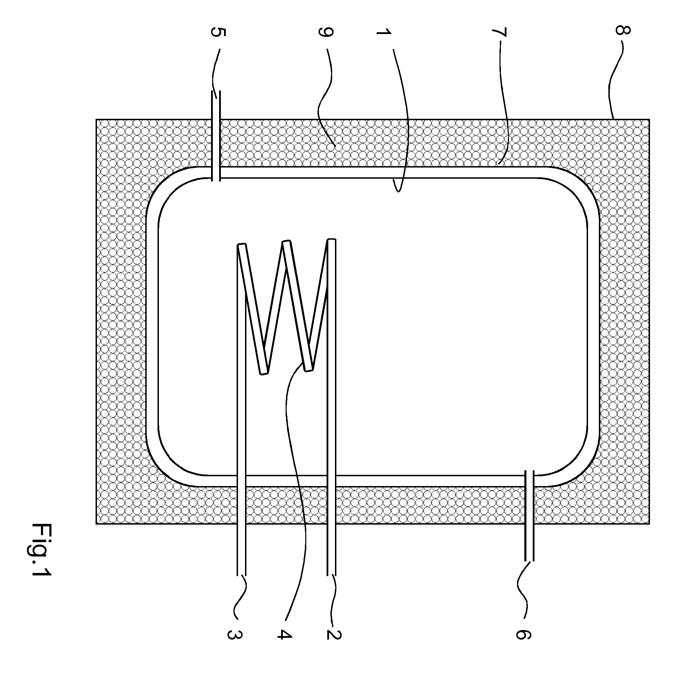

Die Erfindung wird nun anhand der Figur 1 detailliert erläutert. Figur 1 stellt einen nach dem erfindungsgemäßen Verfahren hergestellten Warmwasserspeicher dar.

Der Warmwasserspeicher wird im Wesentlichen gebildet durch einen Behälter 1, welcher zumeist aus emailliertem Stahl besteht. Gemäß dem Stand der Technik ist der Behälter 1 von einer Isolierung 9 umgeben, die Wärme isoliert und wirkt. Eine Ummantelung 8 schließt den Warmwasserspeicher nach außen hin ab. Im Inneren des Behälters 1 ist Warmwasser gespeichert. Das warme Wasser kann über einen Warmwasser-Ablauf 6 entnommen werden. Über einen Kaltwasser-Zulauf 5 wird kaltes Wasser und dem Warmwasserspeicher in dem Maße zugeführt, die das warme Wasser über den Warmwasser-Ablauf 6 entnommen wird. Über einen Wärmetauscher 4 wird das in dem Speicher enthaltene Warmwasser erwärmt. Dazu ist der Wärmetauscher 4 über einen Vorlauf 2 und einen Rücklauf 3 mit einer hier nicht dargestellten Wärmequelle verbunden.

Eine gute Isolierung wird erreicht, wenn die Isolierung 9 aus Polyurethanschaum besteht. Dieser Polyurethanschaum kann in Form von Platten in den Zwischenraum zwischen Behälter 1 und Ummantelung 8 eingebracht werden. Besonders vorteilhaft ist es, den Zwischenraum zwischen Behälter 1 und Ummantelung 8 mit Polyurethanschaum auszuschäumen.

Eine nachteilige Eigenschaft von Polyurethanschaum ist jedoch, dass der Polyurethanschaum für Infrarotstrahlung diffus durchlässig ist. Somit kann die Isolation nach dem Stand der Technik von Infrarotstrahlung durchdrungen werden. Daher ist es aus dem Baubereich bekannt, Isolierplatten aus Polyurethanschaum einseitig oder beidseitig mit einer Aluminiumfolie zu kaschieren. Würde man dieses Herstellungsverfahren auf einen Warmwasserspeicher übertragen, so könnte das besonders vorteilhafte Ausschäumen des Zwischenraums zwischen Behälter und Ummantelung nicht angewendet werden. Daher sieht das erfindungsgemäße Verfahren vor, dass zunächst der Behälter 1 mit einer Beschichtung 7 umhüllt wird. Diese Beschichtung 7 besteht bevorzugt aus einem Material mit niedrigem Emissionsgrad für Infrarotstrahlung, bevorzugt einem Metall mit glatter Oberfläche. Dazu kann der Behälter entweder in eine Metallfolie eingewickelt sein oder mit Folie beklebt sein. Besonders vorteilhaft ist es, wenn es sich um eine selbstlebende Folie handelt. Es ist jedoch völlig ausreichend, wenn die Metallfolie lediglich am Behälter fixiert wird, beispielsweise auch mit Klebestreifen, da die Metallfolie später beim Ausschäumen am Behälter fixiert wird. Als Metall ist Aluminium besonders vorteilhaft, da es kostengünstig als Aluminiumfolie zur Verfügung steht. Anschließend wird im erfindungsgemäßen Verfahren der Behälter 1 in die Ummantelung 8 eingebracht und der Zwischenraum ausgeschaltet. Dabei kann die Ummantelung 8 entweder aus einem stabilen Material bestehen, das sich durch das Ausschäumen nicht verformt, oder aus einem flexiblen Material, das dann für die Dauer des Ausschäumens von außen durch eine Einschalung gestützt wird.

Der durch das erfindungsgemäße Verfahren hergestellte Warmwasserspeicher weist zwischen dem Behälter 1 und der Isolation 9 eine Beschichtung 7 aus einem Material mit niedrigem Emissionsgrad auf. Die erfindungsgemäß direkt auf dem Behälter 1 aufgebrachte Beschichtung 7 ist deshalb besonders vorteilhaft, weil die meist emaillierte Oberfläche des Behälters 1 einen hohen Emissionsgrad für Infrarotstrahlung aufweist.

Die erfindungsgemäße Beschichtung 7 kann von einer weiteren Beschichtung, insbesondere auf der Innenseite der Ummantelung 8 ergänzt sein oder diese ersetzen.

Die Beschichtung 7 kann auch partiell ausgeführt sein.

### Bezugszeichenliste

- 1: Behälter
- 2: Vorlauf
- 3: Rücklauf
- 4: Wärmetauscher
- 5: Kaltwasser-Zulauf
- 6: Warmwasser-Ablauf
- 7: Beschichtung
- 8: Ummantelung
- 9: Isolation

## Patentansprüche

1. Verfahren zur Herstellung eines Warmwasserspeichers für Brauch- oder Heizungswasser umfassend einen Behälter (1), eine Isolation (9) und eine Ummantelung (8),
**gekennzeichnet durch die Schritte**
Bereitstellen des Behälters (1),
Umhüllen des Behälters mit einer Beschichtung (7) mit niedrigem Emissionsgrad für Infrarotstrahlung,
Einsetzen des umhüllten Behälters (1) in die Ummantelung (8),
Ausschäumen des Zwischenraums zwischen umhülltem Behälter (1) und Ummantelung (8) zur Bildung der Isolation (9).

2. Verfahren nach Anspruch 1, **wobei** die Beschichtung (7) aus einem Metall, vorzugsweise mit glatter Oberfläche gebildet wird.

3. Verfahren nach Anspruch 1 oder 2, **wobei** die Beschichtung (7) durch Einwickeln in Folie hergestellt wird.

4. Verfahren nach Anspruch 1 oder 2, **wobei** die Beschichtung (7) durch Bekleben mit bevorzugt selbstklebender Folie hergestellt wird.

5. Verfahren nach einem der vorhergehenden Ansprüche, **wobei** die Ummantelung (8) während des Ausschäumens des Zwischenraums von einer Einschalung gestützt wird.

6. Verfahren nach einem der vorhergehenden Ansprüche, **wobei** die Innenseite der Ummantelung (8) vor dem Ausschäumen ebenfalls mit einer Beschichtung (7) beschichtet wird.

7. Warmwasserspeicher für Brauch- oder Heizungswasser umfassend einen Behälter (1), eine ausgeschäumte Isolation (9) und eine Ummantelung (8), **dadurch gekennzeichnet, dass** der Behälter (1) direkt mit einer Beschichtung (7) mit niedrigem Emissionsgrad umgeben ist und/oder die Innenseite der Ummantelung (8) mit einer Beschichtung (7) mit niedrigem Emissionsgrad bedeckt ist.

8. Warmwasserspeicher nach Anspruch 7, wobei die Beschichtung (7) aus einem Metall, vorzugsweise mit glatter Oberfläche gebildet wird

9. Warmwasserspeicher nach Anspruch 8, wobei die Beschichtung (7) aus Aluminium gebildet wird.
